# EUROPEAN PATENT SPECIFICATION

(11) **EP 1 031 444 B1**
(45) Date of publication and mention of the grant of the patent: **10.09.2003**
(21) Application number: 00830137.6
(22) Date of filing: 24.02.2000
(51) Int. Cl.: B60H 1/00

(54) **Control device with a shape memory actuating member heated by induction**
Steuereinheit mit induktionsbeheizter Formgedächtnis-Betätigungseinrichtung
Dispositif de commande avec un actuateur à mémoire de forme chauffé par induction

(30) Priority: 26.02.1999 IT TO990148
(43) Date of publication of application: 30.08.2000
(73) Proprietor: DENSO THERMAL SYSTEMS S.p.A., 10046 Poirino (Torino) (IT)
(72) Inventor: Butera, Francesco, 10132 Torino (IT); Bianconi, Enrico, 10040 Rivalta di Torino (Torino) (IT)
(74) Representative: Notaro, Giancarlo

(56) References cited:
- EP-A- 0 895 885
- DE-A- 4 113 504
- US-A- 3 725 835
- PATENT ABSTRACTS OF JAPAN vol. 008, no. 182 (M-319), 22 August 1984 (1984-08-22) & JP 59 074446 A (MATSUSHITA DENKI SANGYO KK), 26 April 1984 (1984-04-26)
- PATENT ABSTRACTS OF JAPAN vol. 010, no. 191 (M-495), 4 July 1986 (1986-07-04) & JP 61 036632 A (MATSUSHITA ELECTRIC IND CO LTD), 21 February 1986 (1986-02-21)

## Description

The present invention relates to a device for controlling a movable element, such as the orientable baffle of a motor-vehicle air-conditioning system, comprising a supporting body, an actuator member made of a shape-memory metallic alloy, which is carried by the supporting body and is designed to be connected to the controlled element, and means for causing heating of said actuator member, so as to bring about activation thereof.

DE-A-4113504 discloses a device according to the preamble of claim 1. This document discloses a controllable torsion element including a prestressed wire made of an alloy wound onto a prestressed torsion element. The wire is inductively heated. The material of the torsion element is Al, while the material of the wire is a Ni-Ti alloy.

A further device of the type indicated above is, for example, described and illustrated in the European Patent Application No. EP 0 895 885 of the present applicant. This known device involves the use of a shape-memory actuator member for controlling the baffle of a motor-vehicle air-conditioning system. The use of actuator elements made of shape-memory metallic alloys, typically nickel and titanium alloys, has been known for some time and is described in the technical literature. When a pre-set transition temperature is reached, for instance of the order of 100°C, these elements undergo deformation. In the example illustrated in the European Patent Application EP 0 895 885, the shape-memory actuator element is a torsion bar which is heated by the Joule effect by means of application of an electric voltage that causes passage of an electric current through the said element.

The object of the present invention is to provide a device of the type referred to above, which, on the one hand, has a relatively simple and inexpensive structure and, on the other, presents extremely efficient operation and high performance.

In order to achieve the above object, the subject of the invention is a device according to claim 1.

The above-mentioned means comprise a primary winding, associated to a core, means for supplying current to said primary winding, and a secondary circuit, of which the shape-memory actuator member, which is to be traversed by induced current, forms part. Elastic means are provided which are set between the actuator member and the body of the device and which tend to bring the actuator member back into the starting condition when it is deactivated. Thanks to the above characteristics, it is possible to obtain heating of the shape-memory body with a relatively low supply voltage. In addition, a further important advantage of the device according to the invention as compared to the known devices lies in the fact that the heating thus obtained is localized on the shape-memory actuator member, whereas the parts of the device connected to it, and in particular the electronic supply circuit, are free from the said heating (as, instead, occurs in the known device).

Further characteristics and advantages of the invention will emerge from the ensuing description, made with reference to the attached drawings, which are provided purely as a non-limiting example and in which:

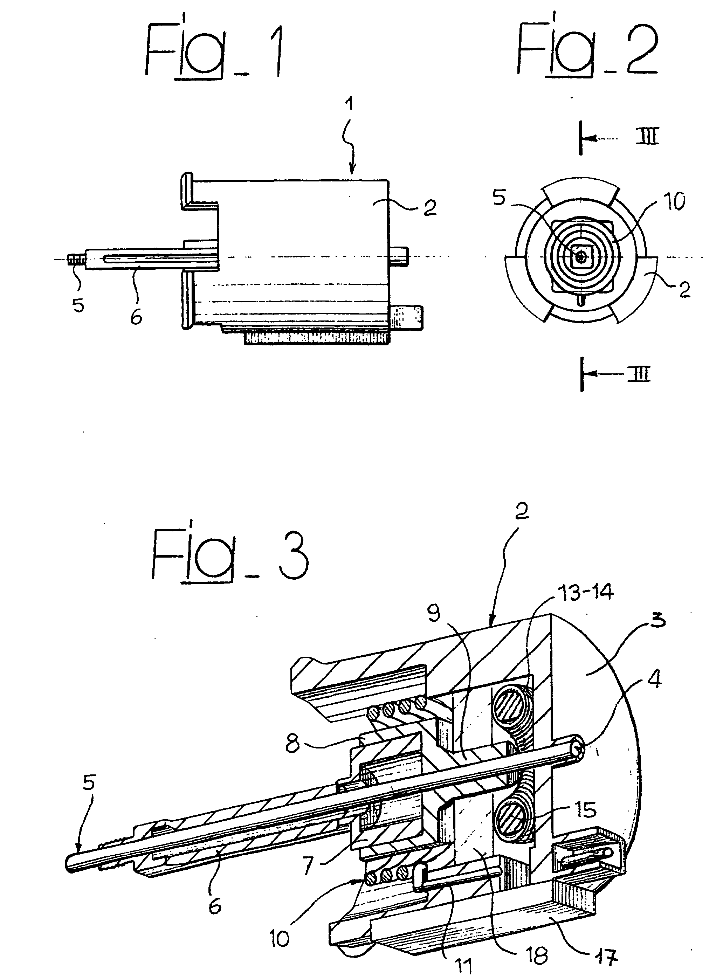

Figure 1 is a schematic side view of a preferred embodiment of the device according to the invention;
Figure 2 is an end view of the device of Figure 1;
Figure 3 is a perspective view at an enlarged scale of the device of Figures 1 and 2, taken according to the cross-sectional line III-III of Figure 2;
Figure 4 is an exploded perspective view of the device of Figure 3;
Figure 5 is a schematic cross-sectional view of the device, aimed at showing the working principle of the device; and
Figure 6 is a diagram of the electric circuit associated to the device according to the invention.

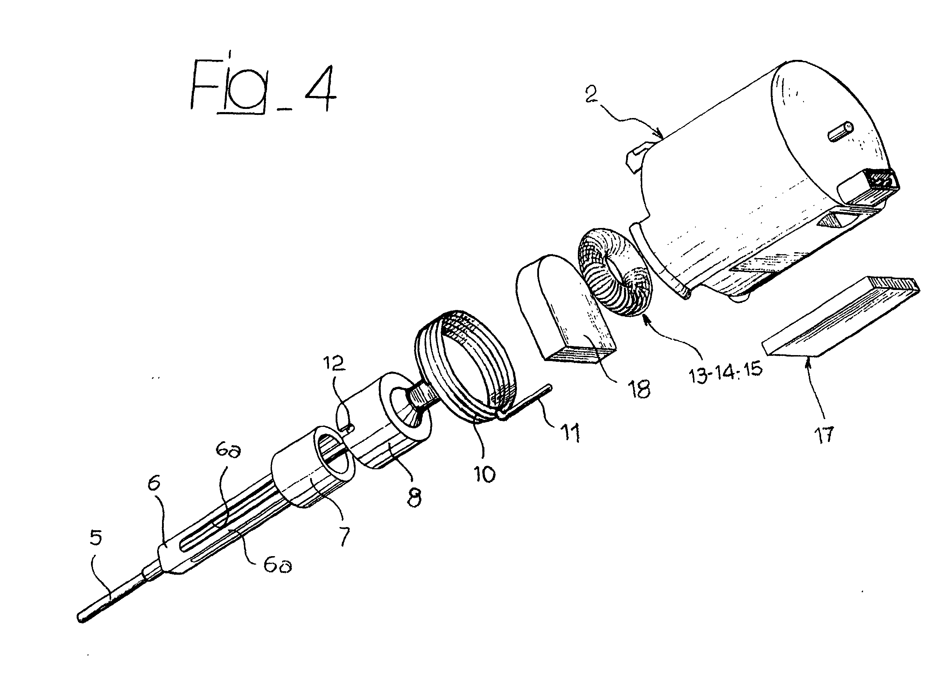

With reference to the drawings, number 1 designates, as a whole, a device for controlling rotation of an orientable baffle (not illustrated) of a motor-vehicle air-conditioning system. The device 1 comprises a cup-shaped cylindrical body 2, made of aluminium, having a bottom wall 3 to which is secured one end 4 of an actuator member 5 consisting of a torsion bar made of a shape-memory metallic alloy. The end of the torsion bar 5 opposite to the end 4 is designed to be connected to the orientable baffle (not illustrated). Passage of current through the bar 5 causes its heating by the Joule effect and the consequent transition from a resting condition to an active condition, with the bar torsionally deformed, to which there corresponds a rotation of the controlled member about the axis of the bar 5. Rigidly connected to the bar 5 is a tubular sheath 6 (see also Figure 4) having longitudinal slits 6a which favour cooling of the bar 5 when the activation command ceases. The sheath 6 is connected, at one end, to a cup-like element 7 received within an element 8 set opposite to it, also shaped like a cup and having one end pin 9 rigidly fixed on the bar 5. A spiral spring 10 is set coaxially around the cup-like element 8 and has one end pin 11 secured to the body 2 and, at the opposite end, one pin (not visible in the drawings) which is received inside a slit 12 of the cup-like element 8.

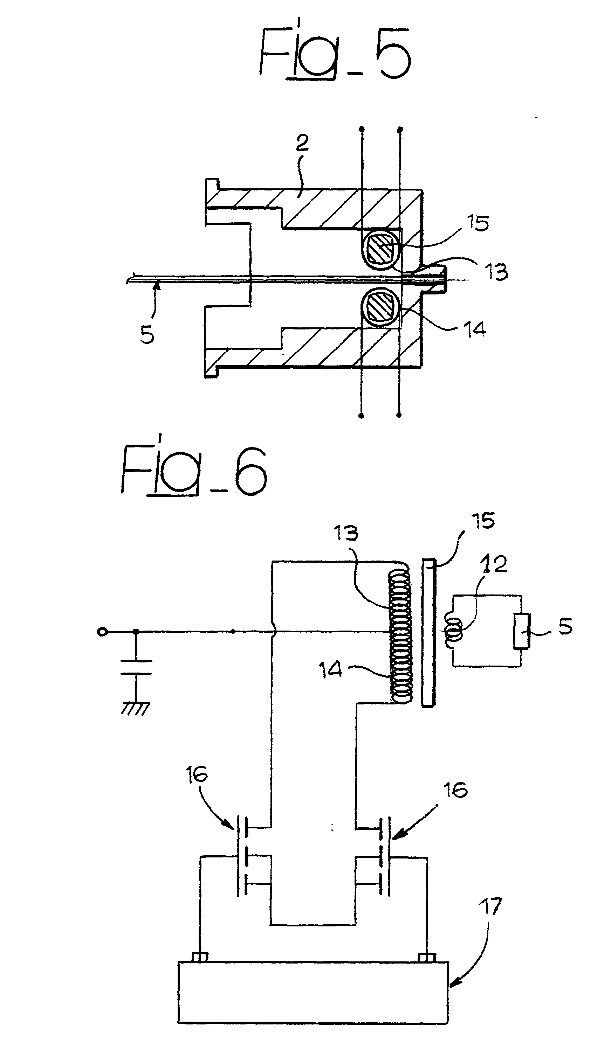

With reference to Figure 5, passage of electric current through the bar 5 for causing heating of the latter is obtained by electromagnetic induction. The bar 5, in fact, together with the body 2, constitutes a secondary winding (with a single turn) in which electric current is induced following upon application of alternating voltage pulses to a primary winding (in the example illustrated consisting of two windings 13, 14) associated to a core 15, which in the example illustrated is in the form of an annular or toroidal element set around the bar 5. This situation is represented schematically in the circuit of Figure 6, where it may be seen that the electronic supply card 17 applies alternating voltage pulses to the primary winding thanks to the interposition of two MOSFETs 16. These pulses create an alternating magnetic field which induces an electromotive force, and hence an electric current, through the bar 5, which thus heats up by the Joule effect. In Figures 4 and 3 also the electronic card 17 associated to the body 2 of the device may be seen.

During operation, when the system is activated, the electronic control circuit causes, in the way described above, passage of current through the bar 5, the said current determining heating and consequent activation of the bar. The bar thus undergoes a torsional deformation which causes rotation of the controlled organ. When the command ceases, and with the subsequent cooling of the bar, the latter returns to its resting condition, assisted by the spring 10.

The shape-memory actuator member could consist of a wire, the length of which changes when it is activated, or of a flexible element, which is deflected, or else of a spring that extends and contracts. In addition, the application of the device according to the invention is general, and is not, therefore, limited to the use illustrated above, given merely to provide an example, that regards control of an orientable baffle or a motor-vehicle air-conditioning system.

Finally, the system is provided with a sensing device for detecting the position of the actuator member, the sensing device being connected to the control electronic unit. This sensing device, designated by 18 in the attached drawings, consists of a potentiometer in the preferred embodiment that has been illustrated. The said potentiometer can be made in any known way, and consequently has not been illustrated in detail in the drawings.

## Claims

1. A device for controlling a movable element, for example for the orientable baffle of an air-conditioning system of a motor vehicle, comprising a supporting body (2), an actuator member (5) made of a shape-memory metallic alloy, which is carried by the supporting body (2) and is designed to be connected to the controlled element, and means (13-17) for causing heating of said actuator member (5) so as to determine activation thereof, wherein said means are designed to cause heating of the actuator member (5) by electromagnetic induction **characterized in that** said actuator member (5) is in the form of a torsion bar, and said body (2) has a cup-like cylindrical conformation, with a bottom wall (3) to which one end (4) of the actuator member (5) is secured, and **in that** a core (15) consisting of an annular element set around the actuator member (5), and **in that** an elastic means (10) consisting of a spiral spring has one end pin secured to the actuator member (5), and, at the opposite end, a pin (11) secured to the body (2) of the device.

2. A device according to Claim 1, **characterized in that** said means (13-17) for causing heating of said actuator member (5) comprise a primary winding (13, 14) associated to said core (15), means (17) for supplying current to said primary winding (13, 14), and a secondary circuit (12) of which the shape-memory actuator member (5) that is to be traversed by induced current forms part.

3. A device according to Claim 1, **characterized in that** said elastic means (10) are set between the actuator member (5) and the body (2) of the device, the said elastic means (10) tending to bring the actuator member (5) back into the starting condition when the latter is deactivated.

4. A device according to Claim 1, **characterized in that** it is provided with sensing means (18) for detecting the position of the actuator member (5).

5. A device according to Claim 4, **characterized in that** said sensing means (18) consist of a potentiometer.

## Patentansprüche

1. Vorrichtung zur Steuerung eines bewegbaren Elements, beispielsweise für ein ausrichtbares Ablenkblech eines Klimatisierungssystems eines Kraftfahrzeugs, mit einem Trägerkörper (2), einem aus einer Formgedächtnis-Metalllegierung hergestellten Betätigungselement (5), welches durch den Trägerkörper (2) getragen wird und ausgelegt ist, mit dem gesteuerten Element verbunden zu werden, sowie Einrichtungen (13-17) zur Veranlassung einer Erwärmung des Betätigungselements (5), um eine zugehörige Aktivierung zu bestimmen, wobei die Einrichtungen ausgelegt sind, eine Erwärmung des Betätigungselements (5) durch eine elektromagnetische Induktion zu veranlassen, **dadurch gekennzeichnet, dass** das Betätigungselement (5) die Form einer Torsionsfeder aufweist und der Körper (2) eine becherartige zylindrische Gestaltung mit einer Bodenwand (3) aufweist, bei der ein Ende (4) des Betätigungselements (5) befestigt ist, und dass ein Kern (15), der ein ringförmiges Element umfasst, um das Betätigungselement (5) herum gesetzt ist, und dass eine elastische Einrichtung (10), die eine Spiralfeder umfasst, einen Endstift aufweist, der bei dem Betätigungselement (5) befestigt ist, und bei dem entgegengesetzten Ende einen Stift (11) aufweist, der bei dem Körper (2) der Vorrichtung befestigt ist.

2. Vorrichtung nach Anspruch 1, **dadurch gekennzeichnet, dass** die Einrichtungen (13-17) zur Veranlassung einer Erwärmung der Betätigungseinrichtung (5) eine Primärwicklung (13, 14), die mit dem Kern (15) verbunden ist, eine Einrichtung (17) zum Zuführen eines Stroms zu der Primärwicklung (13, 14) und eine sekundäre Schaltung (12) umfassen, von der das Formgedächtnis-Betätigungselement (5), das durch einen induzierten Strom zu durchlaufen ist, einen Teil bildet.

3. Vorrichtung nach Anspruch 1, **dadurch gekennzeichnet, dass** die elastische Einrichtung (10) zwischen das Betätigungselement (5) und den Körper (2) der Vorrichtung gesetzt ist, wobei die elastische Einrichtung (10) darauf gerichtet ist, das Betätigungselement (5) zurück in den Startzustand zu bringen, wenn das letztere deaktiviert wird.

4. Vorrichtung nach Anspruch 1, **dadurch gekennzeichnet, dass** sie mit einer Sensoreinrichtung (18) zur Erfassung der Position des Betätigungselements (5) versehen ist.

5. Vorrichtung nach Anspruch 4, **dadurch gekennzeichnet, dass** die Sensoreinrichtung (18) ein Potentiometer umfasst.

## Revendications

1. Dispositif pour commander un élément mobile, par exemple pour la chicane orientable d'un système de climatisation d'un véhicule automobile, comprenant un corps de support (2), un élément formant actionneur (5) formé d'un alliage métallique à mémoire de forme, qui est porté par le corps de support (2) et est conçu de manière à être raccordé à l'élément commandé, et des moyens (13-17) servant à réaliser le chauffage de l'élément formant actionneur (5) par induction électromagnétique, **caractérisé en ce que** ledit élément formant actionneur (5) se présente sous la forme d'une barre de torsion, et ledit corps (2) possède une configuration cylindre en forme de pot, avec une paroi inférieure (3), à laquelle est fixée l'extrémité (4) de l'élément formant actionneur (5), et **en ce qu'**un noyau (15) formé d'un élément annulaire est disposé autour de l'élément formant actionneur (5) et **en ce que** des moyens élastiques (10) formés par un ressort hélicoïdal possèdent une goupille d'extrémité fixé à l'élément formant actionneur (5) et comportent, au niveau de l'extrémité opposée, une goupille (11) fixée au corps (2) du dispositif.

2. Dispositif selon la revendication 1, **caractérisé en ce que** lesdits moyens (13-17) servant à déclencher un chauffage dudit élément formant actionneur (5) comprennent un enroulement primaire (13, 14) associé audit noyau (15), des moyens (17) pour envoyer un courant audit enroulement primaire (13, 14), et un circuit secondaire (12), dont fait partie l'élément formant actionneur à mémoire de forme (16), qui doit être parcouru par un courant induit.

3. Dispositif selon la revendication 1, **caractérisé en ce que** lesdits moyens élastiques (10) sont installés entre l'élément formant actionneur (5) et le corps (2) du dispositif, lesdits moyens élastiques (10) tendant à ramener l'élément formant actionneur (5) dans l'état de départ lorsque ce dernier est désactivé.

4. Dispositif selon la revendication 1, **caractérisé en ce qu'**il est équipé de moyens de détection (18) pour détecter la position de l'élément formant actionneur (5).

5. Dispositif selon la revendication 4, **caractérisé en ce que** lesdits moyens de détection (18) sont constitués par un potentiomètre.
